# EUROPEAN PATENT SPECIFICATION

(11) **EP 2 209 226 B1**
(45) Date of publication and mention of the grant of the patent: **24.07.2013**
(21) Application number: 09100048.9
(22) Date of filing: 19.01.2009
(51) Int. Cl.: H04B 10/071

(54) **Method and device for signal processing in an optical network unit**
Verfahren und Vorrichtung zur Signalverarbeitung in einer optischen Netzwerkeinheit
Procédé et dispositif de traitement de signaux dans une unité de réseau optique

(43) Date of publication of application: 21.07.2010
(73) Proprietor: Nokia Siemens Networks OY, 02610 Espoo (FI)
(72) Inventor: Kloppe, Karl, 81476, München (DE); Rohde, Harald, 81673, München (DE); Smolorz, Sylvia, 81379, München (DE); Treyer, Thomas, 81379, München (DE)
(74) Representative: Lucke, Andreas

(56) References cited:
- EP-A- 0 910 187
- EP-A- 1 624 593
- US-A1- 2005 271 321
- US-A1- 2007 122 157

## Description

The invention relates to a method and to a device for signal processing in an optical network.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

The PON has been standardized and it is currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers around 1550 nm. Dense WDM uses the same transmission window, but with denser channel spacing. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

FTTH in particular comprises two basic architectures, i.e., point-to-point (p2p) and point-to-multipoint (p2mp) fibers. In the p2mp-case, optical power splitters are used to split up a single feeder fiber into many drop cables. Such drop cables run from the power splitter towards the subscribers' homes.

Whenever a problem (e.g. failure, fiber break, etc) occurs in or with an optical outside plant, OTDR (Optical Time Domain Reflectometry) can be used to identify such problem and to locate the point of failure. With p2p fiber topologies, an OTDR measurement unit can be connected temporarily to the fiber at which the failure is reported. In case of p2p, the fiber can be measured from a Central Office (CO) towards the subscriber, because the fiber is more easily accessible at the CO (compared to an accessibility at the subscriber's site).

In case of p2mp fiber plants, a measurement from the CO towards the drop cable is not possible, because the attenuation of the power splitter is high and the reflected signal is a superposition of reflections from all single fibers of the multiple points. It is thus impossible to decide which signal comes from which fiber (and thus from which subscriber's device) .

European Patent Application EP 0 910 187 A2 discloses a distribution network comprising OTDR using coherent detection at the central office.

The **problem** to be solved is to overcome the disadvantages as stated above and in particular to provide for an efficient measurement scheme in case of optical p2mp scenarios.

This problem is solved according to the features of the independent claims. Further embodiments result from the depending claims.

In order to overcome this problem, a method for signal processing in an optical network unit is provided comprising the steps
- a tunable laser sends a signal via an optical fiber;
- a receiver detects a reflected signal sent by the tunable laser;
- based on said reflection a distance to the reflection is determined;
- wherein the receiver is a homodyne receiver or a heterodyne receiver.

A measurement mode (e.g., an OTDR operation) may be conducted according to the method described herein. This measurement mode may reveal a failure or a break of an optical fiber. In particular, the distance to the failure can be determined. Said distance to the point of failure can be conveyed to a network operator via a different connection or network, e.g., via a wireless network.

Hence, OTDR measurement is possible and can be provided by the ONU located, e.g., at or in the subscriber's home.

A measurement can be provided for each drop cable even in p2mp scenarios thereby allowing to decide whether the problem is located in the subscriber's home, in the apartment building or in the street. Such a decision is helpful as based on the location of the failure, a different repair event may be triggered.

According to an embodiment, the optical network unit is connected to an OLT via at least one splitter.

In particular, the OLT may supply several ONUs via said at least one splitter.

In particular, the signal produced by said tunable laser can also be utilized for the receiver as a local oscillator signal.

In another embodiment, the tunable laser is tuned to a fixed wavelength and is modulated with a pulse signal, in particular with a single short pulse signal.

Such sort of modulation can be utilized for determining the distance to the reflection. In particular the tunable laser itself may be adjusted (e.g., tuned) to provide an modulation in addition to a modulation of the user data to be conveyed. This modulation of the tunable laser itself can be used for OTDR purposes (only), in particular to determine at the receiver of the optical component a reflected signal.

It is noted that in case of no failure of break of the fiber, a reflected signal may be determined to be below a particular threshold and thus no such fiber failure is detected. Also, no such reflected signal may be determined in case there is no fiber failure.

In a further embodiment, the receiver records the reflected signal and the reflected signal is analyzed for attenuation and/or fiber breaks or failures.

In a next embodiment, the method is triggered if no user data is detected by the receiver or if no signal is detected by the receiver.

Hence, the OTDR mode may be entered in such case, i.e. if no user data is detected for a given duration.

It is also an embodiment that the method is triggered via an external activation, based in particular upon at least one of the following events:
- pressing or switching a button;
- activation via an interface, in particular via a web interface.

Pursuant to another embodiment, the method (e.g., for entering the OTDR mode) is triggered manually and/or automatically.

According to an embodiment, the method run and/or the reflected signal detected by the laser is displayed in particular as a status information.

Such status information may in particular be visualized on a display or via status LEDs. Hence, the status information may indicate to a user a particular type of failure, which can be communicated by the user via a different connection, e.g., via a mobile interface. This helps the operator to determine the point of failure and thus allows the operator triggering adequate trouble shooting events.

According to another embodiment,
- a correlation between the signal sent by the tunable laser and the signal detected by the receiver is determined to evaluate a round trip time;
- based on the bit rate and the round trip time the distance to the reflection is determined.

In yet another embodiment, an internal round trip time of the processing components is subtracted from the round trip time evaluated, wherein the route trip time of the processing components is assumed to be substantially constant.

According to a next embodiment, the tunable laser sends a pseudo-random bit sequence as the signal.

The same bit rate can be used as during normal operation (i.e. non-OTDR operation). Based on the bit rate the round trip resolution can be determined, e.g., in the order of centimeters, which allows for a sufficient resolution regarding the location of any failure in the fiber plant.

The problem stated above is also solved by a device comprising a and/or being associated with a processor unit and/or a hard-wired circuit and/or a logic device and/or an optical component that is arranged such that the method as described herein is executable thereon.

Further, the problem stated above is solved by an optical network component for processing signals comprising
- a tunable laser that is arranged to convey a signal via an optical fiber;
- a receiver that is arranged to detect a reflected signal sent by the tunable laser, wherein based on said reflection a distance to the reflection is determined;
- wherein the receiver is a homodyne receiver or a heterodyne receiver.

According to an embodiment, said tunable laser is a local oscillator laser of the optical network component.

According to another embodiment, the optical network component is an ONU that is connected to an OLT via at least one splitter.

The problem stated supra is further solved by a communication system comprising the device as described herein.

Embodiments of the invention are shown and illustrated in view of the following figure:

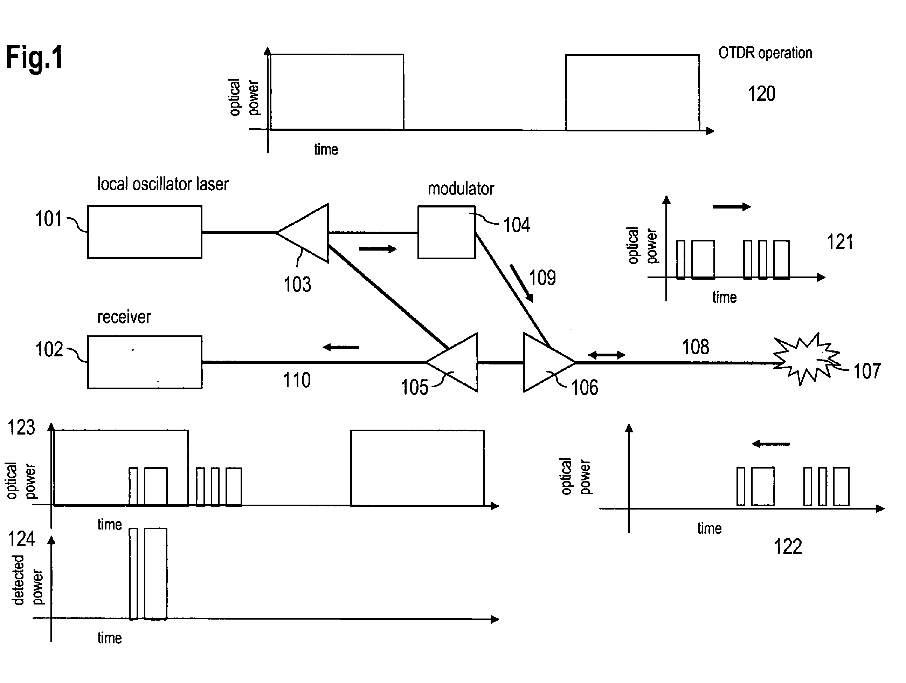

- Fig.1: shows an arrangement comprising a local oscillator laser, splitters, a modulator 104 and a receiver 102, wherein such components could be part of an ONU.

An embodiment of the approach provided is based upon an ONU concept comprising a tunable laser that is used as a local oscillator in a homodyne/heterodyne receiver, wherein this tunable laser is also used as sender for upstream transmission signals.

In normal operation the spectrum of the upstream sender is shifted by modulation by several GHz away from the downstream signal.

This concept can be utilized for OTDR purposes. During OTDR operation, the modulation of the tunable laser in the ONU can be modified: The tunable laser is tuned to a fixed wavelength and is modulated with a single short pulse signal. The homodyne/heterodyne receiver records the reflected signal, which can be analyzed directly for attenuation and/or fiber breaks or failures. Due to the coherent detection, the sensitivity of the receiver is sufficiently high to support this feature.

Further aspects of this approach are as follows:
(a) OTDR can be activated only, if no downstream signal is received. In this case the traffic from other subscribers cannot be influenced by the OTDR signal.
(b) OTDR can optionally be triggered by a push button at the ONU or by a web interface of the ONU. This allows the subscriber to automatically and/or manually trigger the measurement.
(c) OTDR can be triggered automatically by the ONU, if no downstream signal is available.
(d) The result of the OTDR can be displayed as status information in a compact form in the web interface of the ONU or by a visual indication at the device, e.g., via at least one LED. If the subscriber connects to the hotline, s/he may report this status information to the operator.
(e) The basic information delivered by the OTDR can comprise the distance from the ONU to the point of failure. To identify the different segments of the drop cable (in the home, in the building, in the curb) an additional attenuation in the basement of the building and in the optical termination plug in the home can be used.

As an advantage, this built-in OTDR does not require additional hardware costs and it offers an important diagnostic tool for the most relevant failures in the fiber plant of the FTTH scenario.

Due to the nature of a fiber break the operator is not able to read out the measurement directly from the ONU. Nevertheless the subscriber can report the result via a hotline or via a different interface (wireless connection or the like). This may significantly reduce the cost per trouble ticket, especially in cases, where the point of failure is inside the home.

**Fig.1** shows an arrangement comprising a local oscillator laser 101, splitters 103, 105 and 106, a modulator 104 and a receiver 102. These components may be part of an ONU. A fiber 108 connected to the ONU has a failure 107, e.g., a line break. Also, Fig.1 comprising diagrams 120 to 124 showing optical power trends over time at various stages of the arrangement.

The signal generated at the local oscillator laser 101 is modulated via the modulator 104 to produce an upstream data signal 109 to be conveyed via an optical fiber 108. An incoming optical signal via fiber 108 is fed to the receiver 102. Also the signal generated at the local oscillator laser 101 is fed via splitters 103 and 105 to the receiver 102.

For use in OTDR operation, the local oscillator laser 101 can be directly modulated so that the signal reflected at the failure 107 is added to a periodically modulated local oscillator signal obtained at the receiver 102.

Therefore, the time of travel prior to the reflection at the failure 107 can be determined by decoding the "data" in the received signal 110. Only when the local oscillator peak and the reflected peak coincide, a large signal can be observed. Scanning of the reflection time is performed via the length of the transmitted sequence.

Diagram 120 shows the OTDR operation pattern, i.e. time frames that could be utilized for OTDR operation purposes. Diagram 121 shows a pattern to be conveyed via fiber 108 towards the failure 107, which signal is being reflected at the failure 107 as indicated in diagram 122. Diagram 122 shows the optical power of the signal obtained at the receiver 102 and diagram 124 shows the detected power at the receiver in view of the windows set for OTDR operation according to diagram 120.

As an alternative, a test pattern, e.g., a pseudo-random bit sequence, can be sent upstream by the ONU during OTDR operation. The same bit rate as during normal operation may advantageously be used. The upstream signal is reflected at the fiber break and the reflection can be obtained by the receiver of the ONU. The receiver correlates the received bit sequence with the transmitted one and determines a round trip time. This measured round trip time is the sum of the fiber round trip time and the ONU internal round trip time. The ONU round trip time has several components, for example the signal processing time at a digital signal processing stage of the receiver. It can be assumed, that the ONU internal round trip time is constant and the fiber round trip time can be easily calculated by subtracting a constant value from the measured value. Hence the distance of the fiber break from the ONU can be determined based on the measured round trip time.

In case the OTDR test pattern uses the same bit rate as the payload signal during normal operation, the time resolution is determined by the payload bit rate. If, for example, the payload bit rate is 1 Gbit/s, the round trip time resolution is 1 ns, which results in a spatial resolution of 10 cm. This resolution is sufficient to determine a location of the failure in the fiber plant.

It is a particular advantage that for OTDR operation no new or additional hardware is required.

### List of abbreviations

- CO: Central Office
- FTTH: Fiber To The Home
- OLT: Optical Line Termination
- ONU: Optical Network Unit
- OTDR: Optical Time Domain Reflectometry
- p2mp: point-to-multipoint
- p2p: point-to-point
- PON: Passive Optical Network

## Claims

1. A method for signal processing for an optical network unit, comprising the steps:
- a tunable laser sends a signal via an optical fiber (108);
- based on the transmission of said signal (109) in the optical fiber (108) a reflected signal is generated;
- a receiver detects a reflected signal sent by the tunable laser;
- based on said reflection a distance to the reflection is determined;
- wherein the receiver (102) is a homodyne receiver or a heterodyne receiver;
charachterised in that:
- the method is adapted for a passive optical network;
- the tunable laser is used both as an Optical Time Domain Reflectometry (OTDR) signal source and
- as a local oscillator of the coherent receiver (102) for decoding user data at the optical network unit.

2. The method according to claim 1, wherein the optical network unit is connected to an OLT via at least one splitter (106).

3. The method according to any of the preceding claims,
- wherein the receiver records the reflected signal,
- wherein the reflected signal is analyzed for attenuation and/or fiber breaks or failures.

4. The method according to any of the preceding claims,
wherein the method is triggered if no user data is detected by the receiver or if no signal is detected by the receiver.

5. The method according to any of the preceding claims,
wherein the method is triggered via an external activation, based in particular upon at least one of the following events:
- pressing or switching a button;
- activation via an interface, in particular via a web interface.

6. The method according to any of the preceding claims,
wherein the method is triggered manually and/or automatically.

7. The method according to any of the preceding claims,
wherein the method run and/or the reflected signal detected by the laser is displayed in particular as a status information.

8. The method according to any of the preceding claims,
wherein
- a correlation between the signal sent by the tunable laser and the signal detected by the receiver is determined to evaluate a round trip time;
- based on the bit rate and the round trip time the distance to the reflection is determined.

9. The method according to claim 9, wherein an internal round trip time of the processing components is subtracted from the round trip time evaluated, wherein the round trip time of the processing components is assumed to be substantially constant.

10. The method according to any of the preceding claims,
wherein the tunable laser sends a pseudo-random bit sequence as the signal.

11. An optical network component for processing signals comprising
- a tunable laser that is arranged to convey a signal (108) via an optical fiber;
- a receiver (102) that is arranged to detect a reflected signal generated by the reflection of the signal sent by the tunable laser, wherein based on said reflection a distance to the reflection is determined;
- wherein the receiver is a homodyne receiver or a heterodyne receiver;
charachterised in that:
- the component is arranged as a passive optical network component;
- the tunable laser is configured to be used both as an Optical Time Domain Reflectometry (OTDR) signal source and
as a local oscillator of the coherent receiver (102) for decoding user data at the optical network unit.

12. The optical network component according to claim 12,
wherein said tunable laser is a local oscillator laser (101) .

13. The optical network component according to any of claims 12 or 13, wherein the optical network component is an ONU that is connected to an OLT via at least one splitter (106).

## Patentansprüche

1. Verfahren zur Signalverarbeitung für eine Einheit eines optischen Netzwerks, wobei das Verfahren folgende Schritte umfasst:
- ein abstimmbarer Laser sendet ein Signal über eine optische Faser (108);
- auf der Grundlage der Übertragung des Signals (109) in der optischen Faser (108) wird ein reflektiertes Signal generiert;
- ein Empfänger detektiert ein reflektiertes Signal, das durch den abstimmbaren Laser gesendet wurde;
- anhand der Reflexion wird eine Entfernung zu der Reflexion ermittelt;
- wobei der Empfänger (102) ein Homodynempfänger oder ein Heterodynempfänger ist;
**dadurch gekennzeichnet, dass**:
- das Verfahren für ein passives optisches Netzwerk ausgelegt ist;
- der abstimmbare Laser sowohl als eine Optical Time Domain Reflectometry (OTDR)-Signalquelle als auch
- als ein Lokaloszillator des Kohärenzempfängers (102) zum Decodieren von Nutzerdaten in der Einheit eines optischen Netzwerks verwendet wird.

2. Verfahren nach Anspruch 1, wobei die Einheit eines optischen Netzwerks über mindestens einen Teiler (106) mit einem OLT verbunden ist.

3. Verfahren nach einem der vorangehenden Ansprüche,
- wobei der Empfänger das reflektierte Signal aufzeichnet,
- wobei das reflektierte Signal im Hinblick auf Dämpfung und/oder Faserbrüche oder -versagen analysiert wird.

4. Verfahren nach einem der vorangehenden Ansprüche, wobei das Verfahren ausgelöst wird, wenn keine Nutzerdaten durch den Empfänger detektiert werden oder wenn kein Signal durch den Empfänger detektiert wird.

5. Verfahren nach einem der vorangehenden Ansprüche, wobei das Verfahren über eine externe Aktivierung, speziell im Fall mindestens eines der folgenden Ereignisse, ausgelöst wird:
- Drücken oder Schalten einer Taste;
- Aktivierung über eine Schnittstelle, insbesondere über eine Web-Schnittstelle.

6. Verfahren nach einem der vorangehenden Ansprüche, wobei das Verfahren manuell und/oder automatisch ausgelöst wird.

7. Verfahren nach einem der vorangehenden Ansprüche, wobei das ablaufende Verfahren und/oder das reflektierte Signal, das durch den Laser detektiert wird, insbesondere als eine Statusinformation angezeigt werden.

8. Verfahren nach einem der vorangehenden Ansprüche, wobei
- eine Korrelation zwischen dem Signal, das durch den abstimmbaren Laser gesendet wurde, und dem Signal, das durch den Empfänger detektiert wurde, ermittelt wird, um eine Round-trip-Zeit zu bestimmen;
- anhand der Bitrate und der Round-trip-Zeit die Entfernung zu der Reflexion ermittelt wird.

9. Verfahren nach Anspruch 9, wobei eine interne Round-trip-Zeit der Verarbeitungskomponenten von der evaluierten Round-trip-Zeit subtrahiert wird, wobei angenommen wird, dass die Round-trip-Zeit der Verarbeitungskomponenten im Wesentlichen konstant ist.

10. Verfahren nach einem der vorangehenden Ansprüche, wobei der abstimmbare Laser eine Pseudo-Zufalls-Bitfolge als das Signal sendet.

11. Komponente eines optischen Netzwerks zum Verarbeiten von Signalen, die Folgendes umfasst:
- einen abstimmbaren Laser, der dafür ausgelegt ist, ein Signal (108) über eine optische Faser zu übertragen;
- einen Empfänger (102), der dafür ausgelegt ist, ein reflektiertes Signal zu detektieren, das durch die Reflexion des Signals, das durch den abstimmbaren Laser gesendet wurde, generiert wird, wobei anhand der Reflexion eine Entfernung zu der Reflexion ermittelt wird;
- wobei der Empfänger ein Homodynempfänger oder ein Heterodynempfänger. ist;
**dadurch gekennzeichnet, dass**:
- die Komponente als eine Komponente eines passiven optischen Netzwerks ausgelegt ist;
- der abstimmbare Laser dafür konfiguriert ist, sowohl als eine Optical Time Domain Reflectometry (OTDR)-Signalquelle als auch
als ein Lokaloszillator des Kohärenzempfängers (102) verwendet zu werden, um Nutzerdaten in der Einheit eines optischen Netzwerks zu decodieren.

12. Komponente eines optischen Netzwerks nach Anspruch 12, wobei der abstimmbare Laser ein Lokaloszillator-Laser (101) ist.

13. Komponente eines optischen Netzwerks nach einem der Ansprüche 12 oder 13, wobei die Komponente eines optischen Netzwerks eine ONU ist, die über mindestens einen Teiler (106) mit einem OLT verbunden ist.

## Revendications

1. Un procédé de traitement de signal pour une unité de réseau optique, comprenant les étapes suivantes :
- un laser syntonisable envoie un signal par l'intermédiaire d'une fibre optique (108),
- en fonction de la transmission dudit signal (109) dans la fibre optique (108), un signal réfléchi est généré,
- un récepteur détecte un signal réfléchi envoyé par le laser syntonisable,
- en fonction de ladite réflexion, une distance à la réflexion est déterminée,
- le récepteur (102) étant un récepteur homodyne ou un récepteur hétérodyne,
**caractérisé en ce que** :
- le procédé est adapté pour un réseau optique passif,
- le laser syntonisable est utilisé à la fois en tant que source de signal de réflectométrie temporelle optique (OTDR) et
- en tant qu'oscillateur local du récepteur cohérent (102) pour le décodage de données d'utilisateur au niveau de l'unité de réseau optique.

2. Le procédé selon la revendication 1, dans lequel l'unité de réseau optique est raccordée à un OLT par l'intermédiaire d'au moins un séparateur (106).

3. Le procédé selon l'une quelconque des revendications précédentes,
- dans lequel le récepteur enregistre le signal réfléchi,
- dans lequel le signal réfléchi est analysé à la recherche d'une atténuation et/ou de défaillances ou de ruptures de fibre.

4. Le procédé selon l'une quelconque des revendications précédentes, dans lequel le procédé est déclenché si aucune donnée d'utilisateur n'est détectée par le récepteur ou si aucun signal n'est détecté par le récepteur.

5. Le procédé selon l'une quelconque des revendications précédentes, dans lequel le procédé est déclenché par l'intermédiaire d'une activation externe, en fonction en particulier d'au moins un des événements suivantes :
- une pression sur ou une commutation d'un bouton,
- une activation par l'intermédiaire d'une interface, plus particulièrement par l'intermédiaire d'une interface web.

6. Le procédé selon l'une quelconque des revendications précédentes, dans lequel le procédé est déclenché manuellement et/ou automatiquement.

7. Le procédé selon l'une quelconque des revendications précédentes, dans lequel le procédé exécuté et/ou le signal réfléchi détecté par le laser est affiché plus particulièrement sous la forme d'informations d'état.

8. Le procédé selon l'une quelconque des revendications précédentes, dans lequel
- une corrélation entre le signal envoyé par le laser syntonisable et le signal détecté par le récepteur est déterminée de façon à évaluer un temps de propagation aller-retour,
- en fonction du débit binaire et du temps de propagation aller-retour, la distance à la réflexion est déterminée.

9. Le procédé selon la revendication 9, dans lequel un temps de propagation aller-retour interne des composants de traitement est soustrait du temps de propagation aller-retour évalué, le temps de propagation aller-retour des composants de traitement étant supposé être sensiblement constant.

10. Le procédé selon l'une quelconque des revendications précédentes, dans lequel le laser syntonisable envoie une séquence binaire pseudo-aléatoire en tant que signal.

11. Un composant de réseau optique destiné au traitement de signaux comprenant
- un laser syntonisable qui est agencé de façon à acheminer un signal (108) par l'intermédiaire d'une fibre optique,
- un récepteur (102) qui est agencé de façon à détecter un signal réfléchi généré par la réflexion du signal envoyé par le laser syntonisable, dans lequel, en fonction de ladite réflexion, une distance à la réflexion est déterminée,
- le récepteur étant un récepteur homodyne ou un récepteur hétérodyne,
**caractérisé en ce que** :
- le composant est agencé sous la forme d'un composant de réseau optique passif,
- le laser syntonisable est configuré de façon à être utilisé à la fois en tant que source de signal de réflectométrie temporelle optique (OTDR) et
en tant qu'oscillateur local du récepteur cohérent (102) pour le décodage de données d'utilisateur au niveau de l'unité de réseau optique.

12. Le composant de réseau optique selon la revendication 12, dans lequel ledit laser syntonisable est un laser d'oscillateur local (101).

13. Le composant de réseau optique selon l'une quelconque des revendications 12 ou 13, dans lequel le composant de réseau optique est une ONU qui est raccordée à un OLT par l'intermédiaire d'au moins un séparateur (106).
